# EUROPÄISCHE PATENTSCHRIFT

(11) **EP 3 277 989 B1**
(45) Veröffentlichungstag und Bekanntmachung des Hinweises auf die Patenterteilung: **01.04.2020**
(21) Anmeldenummer: 16711515.3
(22) Anmeldetag: 18.02.2016
(51) Int. Cl.: F16J 15/00, B02C 1/00, F16J 15/34, F16J 15/40, G01M 3/02

(54) **VERFAHREN ZUR ÜBERWACHUNG EINES SPERRMITTELKREISLAUFS EINER DYNAMISCHEN DICHTUNG UND VORRICHTUNG MIT EINER DYNAMISCHEN DICHTUNG**
METHOD FOR MONITORING A SEALING AGENT CIRCUIT OF A DYNAMIC SEAL AND DEVICE HAVING A DYNAMIC SEAL
PROCÉDÉ DE SURVEILLANCE D'UN CIRCUIT DE BLOCAGE D'UNE ÉTANCHÉITÉ DYNAMIQUE ET DISPOSITIF POURVU D'UNE ÉTANCHÉITÉ DYNAMIQUE

(30) Priorität: 02.04.2015 DE 102015105105
(43) Veröffentlichungstag der Anmeldung: 07.02.2018
(73) Patentinhaber: NETZSCH-Feinmahltechnik GmbH, 95100 Selb (DE)
(72) Erfinder: WEILAND, Lars-Peter, 95173 Schönwald (DE); NICHTERLEIN, Markus, 95502 Himmelkron (DE); BAUER, Rainer, 95182 Döhlau (DE)
(86) Internationale Anmeldenummer: PCT/DE2016/000068
(87) Internationale Veröffentlichungsnummer: WO 2016/155688

(56) Entgegenhaltungen:
- DE-A1- 19 724 308
- GB-A- 2 244 104
- JP-A- H 024 460
- JP-A- 2012 197 907

## Beschreibung

Die vorliegende Erfindung betrifft ein Verfahren zur Überwachung eines Sperrmittelkreislaufs einer dynamischen Dichtung und Vorrichtung mit einer dynamischen Dichtung gemäß den Merkmalen der Oberbegriffe der Ansprüche 1 und 15.

### Stand der Technik

Um bewegliche Teile einer Maschine gegenüber unbeweglichen Teilen abzudichten, werden in der Regel dynamischen Dichtungen beziehungsweise so genannte Gleitringdichtungen verwendet. Beispielsweise finden dynamische Dichtungen beziehungsweise Gleitringdichtungen bei der Abdichtung drehender Wellen gegenüber stehenden Maschinenbauteilen Verwendung.

Beispielsweise werden dynamische Dichtungen beziehungsweise Gleitringdichtungen verwendet, um die Lagerung von Rührwellen in Rührwerkskugelmühlen abzudichten, so dass insbesondere kein Produkt aus einem Mahlraum der Rührwerkskugelmühle austreten und / oder in einen Maschinenraum der Rührwerkskugelmühle übertreten kann. Innerhalb von Rührwerkskugelmühlen werden Produkte beziehungsweise Mahlgut mit Hilfe von Mahlkörpern zerkleinert. Eine Rührwerkskugelmühle umfasst in der Regel einen Mahlbehälter, in dem eine Rührwelle angeordnet ist. An der Rührwelle sind Rührelemente angeordnet, die eine Durchmischung der Mahlkörper- Mahlgut- Suspension bewirken. Die Rührelemente bewirken insbesondere eine Aktivierung der Mahlkörper, so dass das zwischen den Mahlkörpern befindliche Mahlgut innerhalb der Mahlkörper- Mahlgut- Suspension zerkleinert und / oder dispergiert wird.

Die Rührwelle der Rührwerkskugelmühle ist an einer Antriebswelle angeordnet und wird über einen außerhalb des Mahlbehälters angeordneten Antrieb rotatorisch angetrieben. Die Rührwelle ist beweglich im Boden oder im Deckel des Mahlbehälters gelagert, wobei die Lagerung mit Hilfe mindestens einer dynamischen Dichtung beziehungsweise Gleitringdichtung entsprechend dicht ausgestaltet sein muss, damit kein Austritt von Mahlkörper- Mahlgut- Suspension aus dem Mahlbehälter erfolgt.

Eine besondere Ausführungsform von dynamischen Dichtungen wird durch doppelwirkende Gleitringdichtungen gebildet. Doppelwirkende Gleitringdichtungen zeichnen sich durch eine besonders hohe Betriebssicherheit aus. Zwei Gleitringdichtungen bilden eine Kammer, die aus einem externen Sperrflüssigkeitsbehälter mit einem Schmiermedium versorgt wird. Wird dieses Medium mit einem Druck beaufschlagt, der über dem Prozessdruck liegt, wirkt es wie ein Sperrmedium, welches sowohl eine Prozessleckage als auch eine Kontamination des Produktes effizient verhindert. Insbesondere soll verhindert werden, dass Produkt aus dem Mahlbehälter der Rührwerkskugelmühle in das Maschinengehäuse austritt und / oder das Maschinenöl in den Mahlbehälter eintritt und somit das Produkt verschmutzt. Weiterhin sorgt der erhöhte Druck in der Kammer für eine effektive Schmierung der Gleitflächen.

Bei Abnutzung der Gleitringdichtung kann es zu einem Übertritt von Sperrmedium beziehungsweise Sperrflüssigkeit in den Mahlbehälter der Rührwerkskugelmühle oder in das Maschinengehäuse kommen.

Aus diesem Grund wird der Füllstand der Sperrflüssigkeit im externen Behälter beispielsweise mittels eines Niveau- oder Schwimmerschalters überwacht, der je nach Ausführung einen oder zwei Schaltpunkte aufweist. Bei Unterschreiten eines Minimal-Levels schaltet der Schaltkontakt üblicherweise die Maschine aus, um die Gleitringdichtung und die Rührwerkskugelmühle selbst vor größerem Schaden durch Trockenlaufen zu bewahren. Bei der Ausführung mit zwei Schaltkontakten wird der obere Kontakt als Voralarm benutzt und der Bediener erhält den Hinweis, Sperrflüssigkeit nachzufüllen, bevor die Maschine abgeschaltet wird. Die Überwachung der Menge an Sperrflüssigkeit im System vermittels eines Niveau- oder Schwimmerschalters dient ausschließlich zum Schutz der Maschine und ermöglicht keine Diagnose oder Abschätzung der Restlebensdauer der Gleitringdichtung.

Bei der Abnutzung der Gleitringdichtung kann es aber auch zu einem Übertritt von Produkt aus dem Mahlbehälter in die Sperrflüssigkeit kommen. Da hierbei das Volumen an Sperrflüssigkeit steigt, ist keine sinnvolle Überwachung vermittels eines Niveau- oder Schwimmerschalters möglich.

Hierfür ist bekannt, ein Fenster beziehungsweise Schauglas am Behälter für die Sperrflüssigkeit vorzusehen, durch das die Trübung der Sperrflüssigkeit und gegebenenfalls auch der Pegel, das heißt die Menge beziehungsweise der Füllstand an Sperrflüssigkeit, kontrolliert werden kann.

Auch sind automatische Nachspeiseeinheiten für eine Druckbeaufschlagung als Leckageausgleich bekannt. Insbesondere wird durch die automatische Nachspeiseeinheit ein Verlust an Sperrmittel ergänzt.

Das Dokument GB 2 224 104 A beschreibt eine Gleitringdichtung mit einer Ferderhaltehülse auf. Ein Federteller ist dazu ausgelegt an einer Lasthaltemuffe anzuliegen, wenn die mechanische Dichtung nahezu abgenutzt ist. Über den Sperrflüssigkeitsbehälter in Verbindung mit einem Füllstandsalarm und einem Druckalarm wird der Zustand der Gleitringdichtung überwacht.

Das Dokument DE 197 24 308 A1 offenbart ein Diagnosesystem für eine Gleitringdichtung wobei der Druck des Mediums, der Leckagedruck, die Feuchtigkeit auf der dem Medium abgewandten Seite der Gleitringdichtung, die Temperatur des Mediums und/oder die Temperatur von Elementen der Gleitringdichtung gemessen werden, die Messwerte mit bekannten Vergleichswerten verglichen werden und aus der Abweichung der gemessenen Werte von den bekannten Vergleichswerten die Ausfallwahrscheinlichkeit und/oder die verbleibende Restlebensdauer errechnet wird.

Das Dokument JP 2012 197907 beschreibt eine Verschleißüberwachungsvorrichtung für eine mechanische Dichtung, welche in der Lage ist den Abrieb eines in der Gleitringdichtung verwendeten Dichtungsringes zu überwachen und ausgehend von der Konzentration der aus dem Abrieb entstehenden Schleifpartikeln in einer Flüssigkeit die Lebensdauer des Dichtungsringes vorherzusagen.

Das Dokument JP H02 4460 A offenbart eine Vorrichtung welche die Lebensdauer von Gleitringdichtungen, welche in Maschinen zur Herstellung von Pulvern eingesetzt werden. Dies wird dadurch gelöst dass die Zwischenräume der Dichtungspackungen mit Luft gespült werden. Der Druck in den Zwischenräumen muss dabei höher sein als der des Mahlraumes. Dadurch wird verhindert, dass sich Pulverpartikel in der Gleitringdichtung anreichern.

Die Aufgabe der Erfindung besteht darin, eine einfache, automatisierbare Überwachung der Lebensdauer einer Gleitringdichtung einer Rührwerkskugelmühle bereitzustellen, um rechtzeitig einen Austausch der Gleitringdichtung vornehmen zu können und somit unnötige Maschinenstillstandzeiten zu vermeiden.

Die obige Aufgabe wird durch ein Verfahren zur Überwachung eines Sperrmittelkreislaufs einer dynamischen Dichtung und eine Vorrichtung mit einer dynamischen Dichtung gelöst, die die Merkmale in den Patentansprüchen 1 und 15 umfassen. Weitere vorteilhafte Ausgestaltungen werden durch die Unteransprüche beschrieben.

### Beschreibung

Die Erfindung betrifft ein Verfahren zur Überwachung physikalischer Parameter eines Sperrmittels im Sperrmittelkreislauf einer dynamischen Dichtung einer Vorrichtung mit mindestens einer beweglich gelagerten, insbesondere drehenden, Welle und weiterhin eine Vorrichtung mit mindestens einer beweglich gelagerten, insbesondere drehenden, Welle, die mit einer dynamischen Dichtung gegenüber einem feststehenden Maschinenteil abgedichtet ist. Als Sperrmittel findet in der Regel eine geeignete Flüssigkeit, insbesondere ein Öl oder Ähnliches, Verwendung.

Bei der Vorrichtung kann es sich um eine beliebige Vorrichtung handeln, bei der bewegliche Maschinenteile gegenüber unbeweglichen Maschinenteilen abgedichtet werden, insbesondere bei der eine rotierende Welle gegenüber einer Wand eines Maschinengehäuses abgedichtet werden muss.

Die Erfindung wird insbesondere am Ausführungsbeispiel einer Rührwerkskugelmühle beschrieben. Eine solche Rührwerkskugelmühle umfasst einen beispielsweise zylindrischen Mahlbehälter, der beidseitig mit jeweils einer Abdeckung verschlossen ist. Weiterhin umfasst die Rührwerkskugelmühle eine Rührwelle mit Rührelementen zur Aktivierung von Mahlkörpern im Mahlbehälter. Der Antrieb für die Rührwelle ist außerhalb des Mahlbehälters angeordnet.

Die Antriebs- und / oder Rührwelle ist durch mindestens eine der Abdeckungen geführt und beweglich gelagert. Die Lagerung muss abgedichtet sein, damit Produkt und / oder Mahlkörper nicht aus dem Mahlbehälter austreten können. Die Abdichtung erfolgt vermittels einer dynamischen Dichtung beziehungsweise Gleitringdichtung. Dieser ist ein Sperrmittelkreislauf zugeordnet, wobei das darin zirkulierende Sperrmittel einen ersten Maschinenraum gegen einen zweiten Maschinenraum abdichtet. Beispielsweise dichtet das Sperrmittel des Sperrmittelkreislaufs der dynamischen Dichtung einen durch den Innenraum des Mahlbehälters der Rührwerkskugelmühle gebildeten Produktraum gegen einen Außenraum außerhalb des Mahlbehälters der Rührwerkskugelmühle ab. Insbesondere wird der Innenraum des Mahlbehälters gegen einen Innenraum des Maschinengehäuses der Rührwerkskugelmühle abgedichtet.

Der Sperrmittelkreislauf einer erfindungsgemäßen Vorrichtung umfasst mindestens eine Detektionseinrichtung zum Ermitteln mindestens eines physikalischen Ist- Parameters des Sperrmittels. Weiterhin umfasst die Vorrichtung mindestens eine Auswerteeinheit. Die Detektionseinrichtung ist mit der mindestens einen Auswerteeinheit gekoppelt.

Die durch die Detektionseinrichtung ermittelten Daten werden an die Auswerteeinheit übermittelt. In der Auswerteeinheit wird der mindestens eine ermittelte Ist- Parameter mit mindestens einem definierten Soll- Parameter verglichen. Eine dabei ermittelte Abweichung zwischen dem Ist- Parameter und dem SollParameter wird verwendet, um eine Aussage über einen Betriebszustand der dynamischen Dichtung beziehungsweise Gleitringdichtung zu treffen. Im Folgenden sind die Begriffe dynamische Dichtung und Gleitringdichtung als Synonyme zu verstehen.

Insbesondere ist vorgesehen, eine Änderung des Volumens des Sperrmittels im Sperrmittelkreislauf zu ermitteln und zu dokumentieren. Insbesondere wird durch die Auswerteeinheit eine Zunahme und / oder eine Abnahme des Volumens des Sperrmittels dokumentiert.

Vorzugsweise werden die ermittelte Abweichung zwischen den Ist- Parametern und den Soll- Parametern und / oder die daraus abgeleitete Aussage über einen Betriebszustand der Gleitringdichtung auf einer geeigneten Benutzeroberfläche dargestellt. Hierfür eignet sich beispielsweise ein Touchpanel oder Ähnliches, beispielsweise kann dies über eine Benutzeroberfläche erfolgen, die auch für die Maschinensteuerung der Vorrichtung, beispielsweise für die Maschinensteuerung der Rührwerkskugelmühle, Verwendung findet.

Gemäß einer Ausführungsform der Erfindung wird die ermittelte Abweichung herangezogen, um eine ungefähre Lebensdauer der Gleitringdichtung zu ermitteln und diese beispielsweise auf der Benutzeroberfläche darzustellen. Dadurch können insbesondere ungewünschte Maschinenstillstandzeiten verhindert werden. Beispielsweise kann ein Austausch der Gleitringdichtung durch den Benutzer zu einem geeigneten Zeitpunkt erfolgen und nicht erst, nachdem eine automatische Abschaltung der Vorrichtung aufgrund fehlender Sperrmittelflüssigkeit erfolgt ist. Somit kann der Austausch der Gleitringdichtung beispielsweise durch die Arbeiter einer Tagschicht durchgeführt werden und muss nicht notfallmäßig durch Arbeiter in einer in der Regel schwach besetzten Nachtschicht erfolgen.

Gemäß einer Ausführungsform der Erfindung wird die Zunahme und / oder die Abnahme des Volumens jeweils über eine definierte Zeiteinheit ermittelt.

Erfindungsgemäß wird aus einer ermittelten Volumenabnahme an Sperrmittel im Sperrmittelkreislauf eine Berechnung eines Verschmutzungsgrads eines in der Vorrichtung, insbesondere der Rührwerkskugelmühle, behandelten Produktes durch das Sperrmittel durchgeführt. Dies dient insbesondere der Überwachung der Produktqualität.

Durch die Änderungen im Volumen an Sperrmittel im Sperrmittelkreislauf können insbesondere Aussagen darüber getroffen werden, ob die Leckage, das heißt der Flüssigkeitsverlust, von Sperrmittel in den Produktraum beziehungsweise das Maschinengehäuse oder die Leckage von Produkt in den Sperrmittelkreislauf konstant gleich bleibt oder ob diese zunimmt, was jeweils ein Zeichen für den Verschleiß der Gleitringdichtung ist. Die entsprechend berechnete Information wird über die Benutzeroberfläche ausgegeben, so dass eine zeitnahe Überwachung durch den Benutzer möglich ist. Beispielsweise wird die ermittelte Volumenabweichung verwendet, um die verbleibende Lebensdauer der Gleitringdichtung zu berechnen und für den Benutzer darzustellen.

Gemäß einer Ausführungsform werden die zu erwartenden Betriebsstunden bis zu einer Sicherheitsabschaltung aufgrund eines niedrigen Volumenstands an Sperrmittel im Sperrmittelkreislauf berechnet und über die Benutzeroberfläche angezeigt.

Hierbei kann beispielsweise die Verwendung eines mehrstufigen Warnsystems vorgesehen sein. Beispielsweise kann in der Auswerteeinheit definiert sein, dass zu bestimmten Zeitpunkten vor Erreichen des errechneten Endes der Betriebsdauer Warnsignale erzeugt werden, damit sich der Benutzer rechtzeitig auf den notwendigen Austausch der Gleitringdichtung vorbereiten kann. Dabei können akustische und / oder optische und / oder weitere geeignete Warnsignale Verwendung finden.

Weiterhin kann vorgesehen sein, dass die Auswerteeinheit einen Sender umfasst, der die Messdaten und / oder Warnsignale an einen geeigneten Empfänger sendet. Somit ist beispielsweise eine externe Überwachung der Vorrichtung durch den Hersteller möglich, der dann rechtzeitig entsprechende Wartungsmaßnahmen beim Kunden durchführen kann.

Wird beispielsweise durch die Detektionseinrichtung des Sperrmittelkreislaufs einer die Rührwelle einer Rührwerkskugelmühle gegenüber der Abdeckung des Mahlbehälters abdichtenden Gleitringdichtung ermittelt, dass eine Volumenabnahme von Sperrmittel im Sperrmittelkreislauf vorliegt, dann liegt der Grund darin, dass Sperrmittel in den Produktraum oder das Maschinengehäuse übertritt. In Abhängigkeit von dem jeweiligen Produkt, kann eine geringe Verunreinigung des Produktes mit Sperrmittel akzeptabel sein. In der Regel müssen hierbei jedoch obere Grenzwerte beachtet werden.

Gemäß einer Ausführungsform der Erfindung wird der berechnete Verschmutzungsgrad über die Benutzeroberfläche angezeigt. Vorzugsweise wird dabei auch die maximale Obergrenze eines noch erlaubten Verschmutzungsgrads angezeigt, so dass für den Benutzer die Überwachung der Produktqualität vereinfacht ist beziehungsweise einfach möglich ist.

Weiterhin kann vorgesehen sein, dass in der Auswerteeinheit ein Maximalwert für den Verschmutzungsgrad eingespeichert ist und dass bei Erreichen des maximalen Verschmutzungsgrads eine automatische Abschaltung der Vorrichtung, insbesondere der Rührwerkskugelmühle, erfolgt. Insbesondere ist die Auswerteeinheit mit der Maschinensteuerung der Vorrichtung, insbesondere der Rührwerkskugelmühle, gekoppelt, so dass eine direkte Rückkoppelung zwischen dem Betriebszustand der Gleitringdichtung und der Steuerung der Vorrichtung möglich ist.

Alternativ kann vorgesehen sein, dass aus dem berechneten Verschmutzungsgrad der Zeitpunkt errechnet wird, an dem der Verschmutzungsgrad voraussichtlich dem definierten Maximalwert entsprechend wird. Vorzugsweise wird der berechnete Zeitpunkt über die Benutzeroberfläche angezeigt. Weiterhin können Warnsignale und gegebenenfalls Vorwarnsignale vorgesehen sein, die bei Erreichen bestimmter Verunreinigungszustände jeweils aktiviert werden und so dem Benutzer die Möglichkeit geben, aktiv zu entscheiden, wie weiter vorgegangen werden soll.

Wird durch die Detektionseinrichtung dagegen ermittelt, dass eine Volumenzunahme von Sperrmittel im Sperrmittelkreislauf erfolgt, dann liegt der Grund darin, dass Produkt in den Sperrmittelkreislauf übertritt. Die Verunreinigung des Sperrmittels mit Produkt ist insbesondere problematisch, da durch die Produktbestandteile die Gleitringdichtung beschädigt werden kann.

Gemäß einer Ausführungsform der Erfindung wird aus einer ermittelten Volumenzunahme ein Verschmutzungsgrad des Sperrmittels durch ein in der Vorrichtung, insbesondere in der Rührwerkskugelmühle, behandeltes Produktes berechnet. Zum Schutz der Gleitringdichtung und der Vorrichtung können dieselben Schutz- und Warnmechanismen, wie bereits oben im Falle einer Volumenabnahme beschrieben, Verwendung finden.

Alternativ kann vorgesehen sein, dass vermittels geeigneter Sensoren eine Trübung und / oder eine Dichte und / oder eine Leitfähigkeit des Sperrmittels gemessen wird. Aus der ermittelten Abweichung zwischen den Ist- Parametern und den Soll- Parametern kann dann ein Übertritt des Produktes aus einem Produktraum der Vorrichtung, beispielsweise aus dem Mahlraum beziehungsweise Produktraum der Rührwerkskugelmühle, in das Sperrmittel (insbesondere pro Zeiteinheit) berechnet werden. Insbesondere erfolgt die Messung derart, dass jeweils in Zeitintervallen gemessen wird, so dass eine Aussage getroffen werden kann, ob der Übertritt von Produkt in das Sperrmittel gleichbleibend erfolgt oder über die Zeit zunimmt, was auf eine Alterung der Gleitringdichtung hindeutet.

Gemäß einer Ausführungsform der Erfindung wird ein Ist - Füllstand an Sperrmittel ermittelt und mit einem Soll - Füllstand verglichen. Bei einer positiven Abweichung zwischen dem Soll - Füllstand und dem Ist - Füllstand, das heißt wenn der Ist- Füllstand geringer ist als der Soll- Füllstand, erfolgt eine Berechnung der fehlenden Volumenmenge an Sperrmittel im Sperrmittelkreislauf. Das fehlende Sperrmittelvolumen kann über die Benutzeroberfläche angezeigt werden, so dass der Benutzer weiß, wieviel Sperrmittel nachzufüllen ist.

Alternativ kann die Auswerteeinheit mit einer automatischen Nachspeiseeinheit gekoppelt sein. Die Auswerteeinheit steuert die automatische Nachspeiseeinheit derart an, dass das fehlende Volumen an Sperrmittel automatisiert ergänzt wird, so dass das Niveau an Sperrmittel vollautomatisch konstant gehalten wird.

Gemäß einer weiteren Ausführungsform der Erfindung kann auch der Druck des Sperrmittels im Sperrmittelkreislauf überwacht werden. Insbesondere wird der Druck des Sperrmittels vermittels eines geeigneten Sensors gemessen und mit einem definierten Soll- Druck verglichen.

Wird eine Druckabweichung festgestellt, werden geeignete Maßnahmen eingeleitet, um den Druck wieder auf den Normwert zu bringen. Insbesondere werden bei einer detektierten Druckerhöhung Maßnahmen ergriffen, um den Druck zu senken. Dagegen werden bei einer detektierten Druckerniedrigung Maßnahmen ergriffen, um den Druck entsprechend zu erhöhen.

Wie bereits im Zusammenhang mit dem Erreichen eines errechneten Endes der Betriebsdauer beschrieben, kann vorgesehen sein, dass mindestens ein Warnsignal ausgegeben wird, bevor ein kritischer Betriebszustand der Gleitringdichtung eintritt. Insbesondere kann ein mehrstufiges Warnsystem vorgesehen sein, das in definierten Zeitabständen vorab einen Hinweis gibt, wann mit einer kritischen Situation zu rechnen ist.

Die Vorrichtung, insbesondere die Rührwerkskugelmühle, kann alternativ oder zusätzlich zu den beschriebenen Merkmalen ein oder mehrere Merkmale und / oder Eigenschaften des zuvor beschriebenen Verfahrens umfassen. Ebenfalls kann das Verfahren alternativ oder zusätzlich einzelne oder mehrere Merkmale und / oder Eigenschaften der beschriebenen Vorrichtung aufweisen.

### Figurenbeschreibung

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

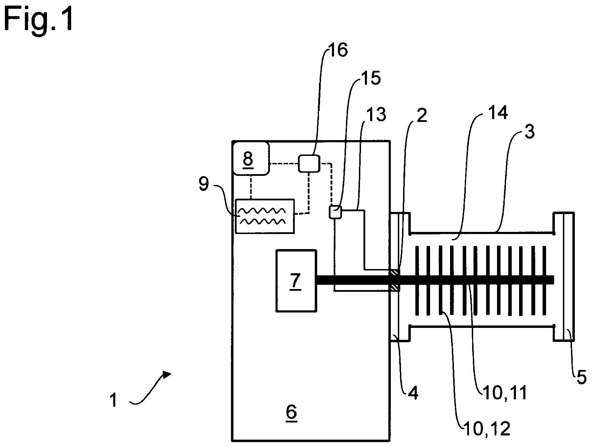

Figur 1 zeigt eine erfindungsgemäße Vorrichtung mit erfindungsgemäßer Überwachung des Betriebszustands der dynamischen Dichtung beziehungsweise Gleitringdichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Figur 1 zeigt eine erfindungsgemäße Vorrichtung am Beispiel einer Rührwerkskugelmühle 1 mit erfindungsgemäßer Überwachung des Betriebszustands der Gleitringdichtung 2. Die Rührwerkskugelmühle 1 umfasst einen zylindrischen Mahlbehälter 3, der beidseitig mit jeweils einer Abdeckung 4, 5 verschlossen ist. Der zylindrische Mahlbehälter 3 ist an einem Maschinengehäuse 6 angeordnet. Innerhalb des Maschinengehäuses 6 sind ein Antrieb 7 für die Rührwerkskugelmühle 1 und eine Maschinensteuerung 8 angeordnet. Weiterhin ist ein Bedienpanel 9 vorgesehen, über das der Benutzer auf die Maschinensteuerung 8 zugreifen und die Rührwerkskugelmühle 1 bedienen kann.

Innerhalb des Mahlbehälters 3 ist ein Rührwerk 10 angeordnet. Dieses besteht insbesondere aus einer Rührwelle 11 und daran angeordneten Rührelementen 12. Die Rührelemente 12 dienen der Aktivierung von im Mahlbehälter 3 angeordneten Mahlkörpern, die als Hilfsmittel zur Zerkleinerung des jeweiligen Produktes dienen. Die Rührwelle 11 ist an den Antrieb 7 innerhalb des Maschinengehäuses 6 gekoppelt, wobei die Rührwelle 11 durch die Abdeckung 4 des Mahlbehälters 3 geführt ist und im Bereich der Abdeckung 4 über eine Gleitringdichtung 2 beweglich gelagert ist.

Die Gleitringdichtung 2 ist an einen Sperrmittelkreislauf 13 gekoppelt. Das im Sperrmittelkreislauf 13 befindliche Sperrmittel dient der Abdichtung des durch den Innenraum des Mahlbehälters 3 gebildeten Produktraums 14 gegen einen Außenraum außerhalb des Mahlbehälters 3, insbesondere gegen den Innenraum des Maschinengehäuses 6.

Dem Sperrmittelkreislauf 13 ist mindestens eine Detektionseinrichtung 15 zum Ermitteln mindestens eines physikalischen Ist- Parameters des Sperrmittels zugeordnet. Weiterhin umfasst die Rührwerkskugelmühle 1 eine Auswerteeinheit 16. Die Detektionseinrichtung 15 und die Auswerteeinheit 16 sind miteinander gekoppelt. Insbesondere werden die durch die Detektionseinrichtung 15 ermittelten Daten an die Auswerteeinheit 16 übermittelt und von dieser zur Berechnung eines Betriebszustands der Gleitringdichtung 2 herangezogen.

Vorzugsweise ermittelt die Detektionseinrichtung 15 bestimmte physikalische Ist- Parameter des Sperrmittels. Diese werden durch die Auswerteeinheit 16 mit vordefinierten Soll- Parametern verglichen. Eine Abweichung zwischen den Ist- und den Soll- Parametern ergibt sich, wenn die Gleitringdichtung 2 aufgrund von Verschleiß weniger gut abdichtet. Die Abweichung wird herangezogen, um eine Aussage über einen Betriebszustand der Gleitringdichtung 2 zu treffen.

Die Ist- Parameter und / oder die Soll- Parameter und / oder die berechnete Abweichung und / oder die daraus abgeleitete Aussage über den Betriebszustand der Gleitringdichtung 2 können über das Bedienpanel 9 der Rührwerkskugelmühle dargestellt werden. Alternativ kann insbesondere für eine bessere Übersichtlichkeit vorgesehen sein, ein eigenes zusätzliches Bedienpanel (nicht dargestellt) hierfür vorzusehen.

Im dargestellten Ausführungsbeispiel ist weiterhin vorgesehen, dass die Auswerteeinheit 16 mit der Maschinensteuerung 8 gekoppelt ist. Dies ist insbesondere notwendig, wenn die Auswerteeinheit 16 einen kritischen Betriebszustand der Gleitringdichtung 2 ermittelt, der einen Notstillstand der Rührwerkskugelmühle 1 notwendig macht, um diese vor Schäden zu schützen.

Setzt man statt des einfachen Schwimmerschalters ein Analogmessgerät ein, ist in Kombination mit einer speicher- programmierbaren Steuerung eine genauere und schnellere Reaktion auf Füllstandsänderungen und eine verbesserte Überwachung des Sperrmittelkreislaufs möglich.

Mit einer Analogmessung lässt sich eine Abweichung quasi millimetergenau bestimmen. Es gibt auch die Möglichkeit, einen Schwimmerschalter mit mehreren Kontakten, beispielsweise eine Reed- Kontakt- Kette, einzusetzen. Bauartbedingt müssen die einzelnen Kontakte einen gewissen Mindestabstand zueinander haben, um sich nicht gegenseitig zu beeinflussen. Damit ist eine millimetergenaue Erfassung nicht möglich, sondern man erhält nur in gewissen Abständen ein Signal, beispielsweise in Abständen von circa 5mm oder 10mm. Ein hierbei verwendetes Analogmessgerät kann beispielsweise ein Radar-Abstandsmessgerät oder eine kapazitive Sonde sein.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Rührwerkskugelmühle
- 2: Gleitringdichtung
- 3: Mahlbehälter
- 4: Abdeckung
- 5: Abdeckung
- 6: Maschinengehäuse
- 7: Antrieb
- 8: Maschinensteuerung
- 9: Bedienpanel
- 10: Rührwerk
- 11: Rührwelle
- 12: Rührelement
- 13: Sperrmittelkreislauf
- 14: Produktraum
- 15: Detektionseinrichtung
- 16: Auswerteeinheit

## Patentansprüche

1. Verfahren zur Überwachung physikalischer Parameter eines Sperrmittels in einem Sperrmittelkreislauf (13) einer dynamischen Dichtung (2) einer Vorrichtung mit mindestens einer beweglich gelagerten Welle (11),
wobei mindestens ein physikalischer Ist- Parameter des Sperrmittel ermittelt wird,
wobei der mindestens eine Ist- Parameter mit mindestens einem definierten Soll- Parametern verglichen wird; wobei eine Abweichung zwischen dem Ist-Parameter und dem Soll- Parameter verwendet wird, um eine Aussage über einen Betriebszustand der dynamischen Dichtung (2) zu treffen, wobei eine Änderung eines Volumens des Sperrmittels im Sperrmittelkreislauf (13) ermittelt und dokumentiert wird,
**dadurch gekennzeichnet, dass**
aus einer ermittelten Volumenabnahme eine Berechnung eines Verschmutzungsgrads eines in der Vorrichtung (1) behandelten Produktes durch Sperrmittel erfolgt.

2. Verfahren nach Anspruch 1, wobei eine Änderung des Volumens des Sperrmittels im Sperrmittelkreislauf (13) über eine definierte Zeiteinheit ermittelt wird.

3. Verfahren nach Anspruch 2, wobei aus der Änderung des Volumens des Sperrmittels im Sperrmittelkreislauf (13) über die definierte Zeiteinheit berechnet wird, ob eine Leckage gleichbleibend ist oder zunimmt und wobei eine entsprechende Information über eine Benutzeroberfläche (9) der Vorrichtung (1) ausgegeben wird.

4. Verfahren nach einem der Ansprüche 1 bis 3, wobei aus der ermittelten Volumenänderung eine Berechnung der verbleibenden Lebensdauer der dynamischen Dichtung (2) erfolgt und wobei die verbleibende Lebensdauer über eine Benutzeroberfläche (9) der Vorrichtung (1) angezeigt wird.

5. Verfahren nach einem der Ansprüche 1 bis 4, wobei aus der ermittelten Volumenänderung und / oder der berechneten Lebensdauer der dynamischen Dichtung (2) eine Berechnung der zu erwartenden Betriebsstunden bis zu einer Sicherheitsabschaltung der Vorrichtung (1) aufgrund eines niedrigen Volumenstands an Sperrmittel im Sperrmittelkreislauf (13) erfolgt und wobei die zu erwartenden Betriebsstunden über eine Benutzeroberfläche (9) der Vorrichtung (1) angezeigt werden.

6. Verfahren nach einem der Ansprüche 1 bis 5, wobei der berechnete Verschmutzungsgrad über eine Benutzeroberfläche (9) angezeigt wird.

7. Verfahren nach einem der Ansprüche 1 bis 6, wobei ein maximaler Wert für den Verschmutzungsgrad vorgegeben wird und wobei bei Erreichen des maximalen Verschmutzungsgrads eine automatische Abschaltung der Vorrichtung (1) erfolgt.

8. Verfahren nach Anspruch 7, wobei ein Zeitpunkt errechnet wird, an dem der Verschmutzungsgrad voraussichtlich den definierten Maximalwert erreichen wird und wobei der berechnete Zeitpunkt über die Benutzeroberfläche (9) angezeigt wird.

9. Verfahren nach einem der voranstehenden Ansprüche, wobei aus einer ermittelten Volumenzunahme eine Berechnung eines Verschmutzungsgrads des Sperrmittels durch ein in der Vorrichtung (1) behandeltes Produkt erfolgt.

10. Verfahren nach einem der voranstehenden Ansprüche, wobei vermittels eines geeigneten Sensors eine Trübung und / oder eine Dichte und / oder eine Leitfähigkeit des Sperrmittels gemessen wird und aus der ermittelten Abweichung zwischen dem mindestens einen Ist- Parameter und dem mindestens einen Soll- Parameter ein Übertritt eines Produktes aus einem Produktraum (3) der Vorrichtung (1) in das Sperrmittel berechnet wird.

11. Verfahren nach einem der voranstehenden Ansprüche, wobei ein Soll - Volumenstand an Sperrmittel mit einem Ist - Volumenstand an Sperrmittel verglichen wird, wobei bei einer positiven Abweichung zwischen dem Soll - Volumenstand und dem Ist - Volumenstand eine Berechnung der fehlenden Volumenmenge an Sperrmittel im Sperrmittelkreislauf (13) erfolgt.

12. Verfahren nach Anspruch 11, wobei das fehlende Volumen an Sperrmittel über eine Benutzeroberfläche (9) angezeigt wird und / oder wobei das fehlende Volumen an Sperrmittel automatisiert über eine automatische Nachspeiseeinheit ergänzt wird.

13. Verfahren nach einem der voranstehenden Ansprüche, wobei der Druck des Sperrmittels im Sperrmittelkreislauf (13) vermittels eines Drucksensors gemessen und mit einem definierten Soll- Druck verglichen wird und wobei bei Identifizierung einer Druckabweichung Maßnahmen zur Druckanpassung eingeleitet werden.

14. Verfahren nach einem der voranstehenden Ansprüche, wobei mindestens ein Warnsignal ausgegeben wird, bevor ein kritischer Betriebszustand der dynamischen Dichtung (2) eintritt.

15. Vorrichtung (1) umfassend eine vermittels einer dynamischen Dichtung (2) beweglich gelagerten Welle (11), die dynamische Dichtung (2) umfassend einen Sperrmittelkreislauf (13), wobei die dynamischen Dichtung (2) mit Hilfe eines im Sperrmittelkreislauf (13) angeordneten Sperrmittels einen ersten Produktraum (14) der Vorrichtung gegen einen zweiten Maschinenraum (6) der Vorrichtung (1) abdichtet, wobei der Sperrmittelkreislauf (13) mindestens eine Detektionseinrichtung (15) zum Ermitteln mindestens eines physikalischen Volumens des Sperrmittels umfasst und dass die Detektionseinrichtung (15) mit mindestens einer Auswerteeinheit (16) zur Bewertung von durch die Detektionseinrichtung (15) ermittelten Daten gekoppelt ist, wobei die Vorrichtung (1) eine Benutzeroberfläche zur Darstellung von Informationen der Vorrichtung (1) und / oder zur Maschinensteuerung umfasst,
**dadurch gekennzeichnet, dass**
aus einer ermittelten Volumenabnahme des Sperrmittels ein Verschmutzungsgrads eines in der Vorrichtung (1) behandelten Produktes durch Sperrmittel berechenbar und wobei der ermittelte Verschmutzungsgrad durch die Benutzeroberfläche (9) darstellbar ist.

16. Vorrichtung (1) nach Anspruch 15, wobei eine Steuerung und / oder Regulierung der Vorrichtung (1) mit Hilfe eines Verfahrens gemäß einem der Ansprüche 1 bis 13 erfolgt.

## Claims

1. A method for monitoring physical parameters of a sealing agent in a sealing agent circuit (13) of a dynamic seal (2) of a device with at least one movably mounted shaft (11), wherein at least one physical actual parameter of the sealing agent is determined, wherein the at least one actual parameter is compared with at least one defined nominal parameter; wherein a deviation between the actual parameter and the nominal parameter is used to make a prediction about an operating state of the dynamic seal (2), wherein a change in volume of the sealing agent in the sealing agent circuit (13) is determined and recorded,
**characterised in that**,
from a determined reduction in volume, a calculation of a degree of contamination of the product treated in the device (1) takes place at by means of the sealing agent.

2. The method according to claim 1, wherein a change in the volume of the sealing agent in the sealing agent circuit (13) is determined over a defined time unit.

3. The method according to claim 2, wherein it is calculated from the change in the volume of the sealing agent in the sealing agent circuit (13) over the defined time unit whether a leakage is constant or increasing, and wherein corresponding information is outputted via a user interface (9) of the device (1).

4. The method according to any one of claims 1 to 3, wherein, from the determined change in volume, a calculation of the remaining life of the dynamic seal (2) takes place and wherein the remaining life is displayed via a user interface (9) of the device (1).

5. The method according to any one of claims 1 to 4, wherein, from the determined change in volume and/or the calculated life of the dynamic seal (2), a calculation of the operating hours to be expected up to a safety shutdown of the device (1) takes place on the basis of a low volume level of sealing agent in the sealing agent circuit (13) and wherein the operating hours to be expected are displayed via a user interface (9) of the device (1).

6. The method according to any one of claims 1 to 5, wherein the calculated degree of contamination is displayed via a user interface (9).

7. The method according to any one of claims 1 to 6, wherein a maximum value for the degree of contamination is specified and wherein an automatic shutdown of the device (1) takes place when the maximum degree of contamination is reached.

8. The method according to claim 7, wherein a time is calculated at which the degree of contamination is expected to reach the defined maximum value and wherein the calculated time is displayed via the user interface (9).

9. The method according to any one of the preceding claims, wherein, from a determined increase in volume, a calculation of a degree of contamination of the sealing agent by a product treated in the device (1) takes place.

10. The method according to any one of the preceding claims, wherein turbidity and/or density and/or conductivity of the sealing agent is measured by means of a suitable sensor and a transfer of a product out of a product chamber (3) of the device (1) into the sealing agent is calculated from the determined deviation between the at least one actual parameter and the at least one nominal parameter.

11. The method according to any one of the preceding claims, wherein a nominal volume level of sealing agent is compared with an actual volume level of sealing agent, wherein a calculation of the lacking volumetric quantity of sealing agent in the sealing agent circuit (13) takes place in the case of a positive deviation between the nominal volume level and the actual volume level.

12. The method according to claim 11, wherein the lacking volume of sealing agent is displayed via a user interface (9) and/or wherein the lacking volume of sealing agent is automatically supplemented by means of an automatic refill unit.

13. The method according to any one of the preceding claims, wherein the pressure of the sealing agent in the sealing agent circuit (13) is measured by means of a pressure sensor and compared with a defined nominal pressure and wherein measures for the pressure adjustment are initiated when a pressure deviation is identified.

14. The method according to any one of the preceding claims, wherein at least one warning signal is emitted before a critical state in the dynamic seal (2) arises.

15. A device (1) comprising a shaft (11) movably mounted by means of a dynamic seal (2), the dynamic seal (2) comprising a dynamic seal circuit (13), wherein the dynamic seal (2), with the aid of a sealing agent arranged in the sealing agent circuit (13), seals a first product chamber (14) of the device against a second machine chamber (6) of the device (1), wherein the sealing agent circuit (13) comprises at least one detection device (15) for determining at least one physical volume of the sealing agent and the detection device (15) is coupled with at least one evaluation unit (16) for evaluating data determined by the detection device (15), wherein the device (1) comprises a user interface for displaying information of the device (1) and/or for the machine control,
**characterised in that**,
from a determined decrease in volume of the sealing agent, a degree of contamination of a product treated in the device (1) by the sealing agent can be calculated and wherein the determined degree of contamination can be displayed by the user interface (9).

16. The device (1) according to claim 15, wherein a control and/or regulation of the device (1) takes place with the aid of a method according to any one of claims 1 to 13.

## Revendications

1. Procédé, destiné à superviser des paramètres physiques d'un produit de barrage dans un circuit de produit de barrage (13) d'un joint dynamique (2) d'un dispositif pourvu d'au moins un arbre (11) logé de manière mobile, au moins un paramètre physique réel du produit de barrage étant déterminé,
l'au moins un paramètre réel étant comparé avec au moins un paramètre de consigne défini ; un écart entre le paramètre réel et le paramètre de consigne étant utilisé pour tirer une conclusion sur un état de service du joint dynamique (2), une modification d'un volume du produit de barrage dans le circuit de produit de barrage (13) étant déterminée et documentée,
**caractérisé en ce**
**qu'**à partir d'une diminution de volume déterminée, il s'effectue un calcul d'un niveau d'encrassement d'un produit traité dans le dispositif (1) par du produit de barrage.

2. Procédé selon la revendication 1, une modification du volume du produit de barrage dans le circuit de produit de barrage (13) étant déterminée sur une unité temps définie.

3. Procédé selon la revendication 2, à partir de la modification du volume du produit de barrage dans le circuit de produit de barrage (13) étant calculé sur l'unité temps définie si une fuite reste constante ou évolue et une information correspondante étant délivrée via une interface utilisateur (9) du dispositif (1).

4. Procédé selon l'une quelconque des revendications 1 à 3, à partir de la modification de volume déterminée s'effectuant un calcul de la durée de vie restante du joint dynamique (2) et la durée de vie restante étant affichée via une interface utilisateur (9) du dispositif (1).

5. Procédé selon l'une quelconque des revendications 1 à 4, à partir de la modification de volume déterminée et / ou de la durée de vie calculée du joint dynamique (2) s'effectuant un calcul des heures de service à attendre jusqu'à une mise hors service de sécurité du dispositif (1) en raison d'un faible niveau volumique du produit de barrage dans le circuit de produit de barrage (13) et les heures de service à attendre étant affichées via une interface utilisateur (9) du dispositif (1).

6. Procédé selon l'une quelconque des revendications 1 à 5, le niveau d'encrassement calculé étant affiché via une interface utilisateur (9).

7. Procédé selon l'une quelconque des revendications 1 à 6, une valeur maximale pour le niveau d'encrassement étant prédéfinie et à l'atteinte du niveau d'encrassement maximal s'effectuant une mise hors service automatique du dispositif (1).

8. Procédé selon la revendication 7, un moment étant calculé auquel le niveau d'encrassement atteindra de manière prévisionnelle la valeur maximale définie et le moment calculé étant affiché via l'interface utilisateur (9).

9. Procédé selon l'une quelconque des revendications précédentes, à partir d'une augmentation volumique déterminée s'effectuant un calcul d'un niveau d'encrassement du produit de barrage par un produit traité dans le dispositif (1).

10. Procédé selon l'une quelconque des revendications précédentes, au moyen d'un capteur adapté, une turbidité et / ou une densité et / ou une conductibilité du produit de barrage étant mesurée et à partir de l'écart déterminé entre l'au moins un paramètre réel et l'au moins paramètre de consigne, un débordement d'un produit hors d'un espace à produit (3) du dispositif (1) dans le produit de barrage étant calculé.

11. Procédé selon l'une quelconque des revendications précédentes, un niveau volumique de consigne du produit de barrage étant comparé avec un niveau volumique réel du produit de barrage, lors d'un écart positif entre le niveau volumique de consigne et le niveau volumique réel, s'effectuant un calcul de la quantité volumique manquante du produit de barrage dans le circuit de produit de barrage (13).

12. Procédé selon la revendication 11, le volume manquant de produit de barrage étant affiché via une interface utilisateur (9) et / ou le volume manquant de produit de barrage étant complété de manière automatisée via une unité automatique de rechargement.

13. Procédé selon l'une quelconque des revendications précédentes, la pression du produit de barrage dans le circuit de produit de barrage (13) étant mesurée au moyen d'un capteur de pression et comparée avec une pression de consigne et lors d'une identification d'un écart de pression, des actions étant engagées pour adapter la pression.

14. Procédé selon l'une quelconque des revendications précédentes, au moins un signal d'avertissement étant délivré, avant l'intervention d'un état de service critique du joint dynamique (2).

15. Dispositif (1), comprenant un arbre (11) logé de manière mobile au moyen d'un joint dynamique (2), le joint dynamique (2) comprenant un circuit de produit de barrage (13), le joint dynamique (2) assurant à l'aide d'un produit de barrage placé dans le circuit de produit de barrage (13) l'étanchéité d'un premier espace à produit (14) du dispositif par rapport à un deuxième espace machine (6) du dispositif (1), le circuit de produit de barrage (13) comprenant au moins un système détecteur (15), destiné à déterminer au moins un volume physique du produit de barrage et le système détecteur (15) étant connecté avec au moins une unité d'évaluation (16), destinée à évaluer des données déterminées par le système détecteur (15), le dispositif (1) comprenant une interface utilisateur, destinée à représenter des informations du dispositif (1) et / ou à commander la machine,
**caractérisé en ce**
**qu'**à partir d'une diminution de volume déterminée du produit de barrage, un niveau d'encrassement d'un produit traité dans le dispositif (1) par du produit de barrage est susceptible d'être calculé et le niveau d'encrassement déterminé étant susceptible d'être représenté par l'interface utilisateur (9).

16. Dispositif (1) selon la revendication 15, une commande et / ou une régulation du dispositif (1) s'effectuant à l'aide d'un procédé selon l'une quelconque des revendications 1 à 13.
